# EUROPÄISCHE PATENTSCHRIFT

(11) **EP 0 416 302 B1**
(45) Veröffentlichungstag und Bekanntmachung des Hinweises auf die Patenterteilung: **14.07.1993**
(21) Anmeldenummer: 90115214.0
(22) Anmeldetag: 08.08.1990
(51) Int. Cl.: G01N 21/88, G01M 11/02

(54) **Verfahren für die optische Qualitätsprüfung von grossflächigen Scheiben aus einem transparenten Werkstoff wie Glas**
Procedure for optical quality inspection of large-faced panes of a transparent material like glass
Procédé pour l'inspection optique de la qualité des carreaux de grande surface composés de matériau transparent comme le verre

(30) Priorität: 02.09.1989 DE 3929234; 11.11.1989 DE 3937559
(43) Veröffentlichungstag der Anmeldung: 13.03.1991
(73) Patentinhaber: FLACHGLAS AKTIENGESELLSCHAFT, 90762 Fürth (DE)
(72) Erfinder: Erbeck, Ralf, Dr. Dipl.-Ing., D-4320 Hattingen 15 (DE)
(74) Vertreter: Andrejewski, Walter

(56) Entgegenhaltungen:
- EP-A- 0 040 704
- DE-A- 2 258 702
- DE-A- 3 243 372
- DE-A- 3 521 686
- DE-A- 3 522 179
- DE-A- 3 528 009
- DE-A- 3 600 199
- DE-A- 3 640 891
- GB-A- 1 185 472
- GB-A- 2 046 433
- JOURNAL OF SCIENTIFIC INSTRUMENTS, Band 42, 1965 The Institute of Physics and The Physical Society London P.S. THEOCARIS et al. "Slope measurement by means of moire fringes" Seiten 607-610

## Beschreibung

Die Erfindung betrifft ein Verfahren für die optische Qualitätsprüfung von großflächigen Scheiben aus einem transparenten Werkstoff wie Glas, insbesondere von Kraftfahrzeug-Winschutzscheiben. Dabei wird eine Moiré-Bildauswertung angewendet, bei der ein durchleuchtetes Flächenraster über ein Objektiv auf einem Referenzraster abgebildet und das Moiré-Bild als Superponat aus dem Bild des Flächenrasters und dem Referenzraster erzeugt wird. Großflächige Scheiben bezeichnet solche, deren Flächengröße der Flächengröße üblicher Fensterscheiben und Kraftfahrzeugscheiben entspricht. Der Ausdruck Flächenraster besagt, daß das Raster auf einer Fläche, z. B. auf der Oberfläche einer Glasscheibe oder einer transparenten Folie, angeordnet ist. Dabei kann mit den verschiedensten Rastergeometrien gearbeitet werden. Das Referenzraster entspricht unter Berücksichtigung des Abbildungsmaßstabes des Objektives möglichst genau dem Flächenraster.

Eine Moiré-Bildauswertung, bei der ein durchleuchtetes Flächenraster über ein Objektiv auf einem Referenzraster abgebildet und das Moiré-Bild als Superonat aus dem Bild des Flächenrasters und dem Referenzraster erzeugt wird, ist an sich bekannt (J. Sci. Instrum., Vol 42, 1965, S. 607 bis 610), jedoch nicht für die Qualitätsprüfung von großtechnisch hergestellten großflächigen Scheiben, insbesondere Kraftfahrzeugscheiben, im Rahmen einer mehr oder weniger automatisierten Fertigung. Die bekannte Moiré-Bildauswertung dient eher wissenschaftlichen Zwecken zur Feststellung von kleinen Unebenheiten an kleinen durchsichtigen Platten mit einer Flächengröße von einigen Quadratzentimetern. Monochromatisches Licht wird dabei mit Hilfe einer besonderen Optik als Bündel von parallelen Lichtstrahlen auf das Flächenraster geleitet und durchleuchtet dieses. Diese Optik, das Flächenraster, die zu untersuchende Platte, das Objektiv und das Referenzraster sind mehr oder weniger gleich groß. Eine Übertragung dieser bekannten Maßnahmen auf die Untersuchung von großflächigen Scheiben und insbesondere Kraftfahrzeug-Windschutzscheiben im Rahmen einer großtechnischen Qualitätsprüfung würde zu extrem aufwendigen Maßnahmen führen, weil optische Einrichtungen extrem großen Durchmessers benutzt werden müßten, die der Sonderfertigung bedürften und darüber hinaus leicht Ungenauigkeiten mitbringen, die die Auswertung beeinträchtigen.

Bei einem bekannten Verfahren für die optische Qualitätsprüfung von Kraftfahrzeugscheiben, insbesondere von Kraftfahrzeug-Windschutzscheiben (DE-OS 36 00 199), befindet sich das Flächenraster auf einem Diapositiv. Es wird mit Hilfe eines Projektors auf einer Projektionsfläche abgebildet. Auf der Projektionsfläche ist das Referenzraster angeordnet. Das Objektiv befindet sich in dem Projektor. Die zu untersuchende Scheibe befindet sich in dem Strahlengang des Projektors und damit im Strahlengang hinter dem Objektiv des Projektors sowie vor der Projektionsfläche. Das Meßsignal ist das durch einen optischen Fehler in Form einer Brechkraftabweichung in der zu untersuchenden Scheibe gegenüber dem ungestörten Flächenraster gestörte Superponat. Diese bekannten Maßnahmen sind nicht frei von Nachteilen. Insbesondere die Auswertung, die zumeist per Augeninspektion von einer Hilfsperson durchgeführt wird, ist zeitaufwendig. Ein Meßwert liegt nur in der Mitte jeweils eines Moiré-Streifens vor, woraus ein schlechtes Auflösungsvermögen resultiert. Die Brechkraft wird aus der Steigung der Moiré-Linien ermittelt. Die Bildqualität des Moiré-Bildes leidet an dem schlechten Kontrast, welcher dadurch entsteht, daß helle projizierte Rasterlinien auf den dunklen Stellen der Projektionswand nicht voll absorbiert werden. Auch ist bei der Superposition zweier heller Linien auf der Projektionsfläche die rückgestreute Lichtintensität weit geringer als bei einer Transmission. Bei dem bekannten Verfahren wird außerdem das Moiré-Bild stets vom sogenannten Schattenbild der Scheibe störend überlagert. Dadurch kann das Moiré-Bild praktisch unauswertbar werden. Das bekannte Verfahren führt bei einer elektronischen Bildverarbeitung zwangsläufig zu Einzelstreifen-Verfolgungsalgorithmen, welche den Einsatz effizienter Parallelrechner-Verfahren ausschließen. Die Auswertzeit pro Messung ist daher sehr hoch. Die Bestimmung der Steigung der Moiré-Streifen ist im Rahmen der bekannten Maßnahmen nur mit großer Unsichterheit möglich und folglich ist das Auflösungsvermögen verbesserungsbedürftig. - Das vorstehend angesprochene Verfahren für die optische Qualitätsprüfung von Kraftfahrzeug-Windschutzscheiben unterliegt den Bestimmungen von DIN 52 305 oder ECE 43, denen auch das erfindungsgemäße Verfahren gehorchen muß.

Der Erfindung lieft die Aufgabe zugrunde, ein Verfahren für die großtechnische optische Qualitätsprüfung der eingangs angegebenen Zweckbestimmung zu schaffen, welches sich durch hohe Empfindlichkeit, Genauigkeit und hohes Auflösungsvermögen auszeichnet und darüber hinaus eine Auswertung in extrem kurzen Zeitspannen zuläßt.

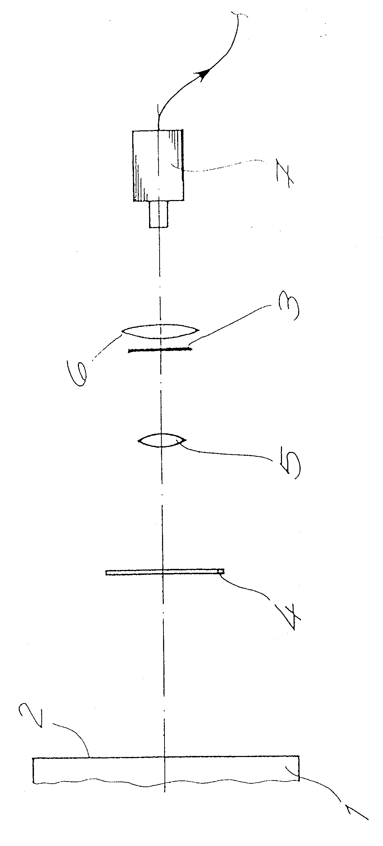

Zur Lösung dieser Aufgabe ist Gegenstand der Erfindung ein Verfahren für die optische Qualitätsprüfung von großflächigen Scheiben aus einem transparenten Werkstoff wie Glas, insbesondere von Kraftfahrzeug-Windschutzscheiben, mit Hilfe einer Moiré-Bildauswertung, bei der ein beleuchtetes Flächenraster über ein Objektiv auf einem Referenzraster abgebildet und das Moiré-Bild als Superponat aus dem Bild des Flächenrasters und dem Referenzraster erzeugt wird, wobei das Flächenraster auf einer von hinten gleichmäßig ausgeleuchteten Leuchtwand angeordnet wird, die zumindest der Größe der zu untersuchenden Kraftfahrzeugscheibe entspricht, wobei die zu untersuchende Scheibe zwischen Flächenraster und Objektiv angeordnet wird, wobei das Flächenraster auf einem Referenzraster abgebildet wird, dessen Flächengröße einem Bruchteil der Flächengröße der zu untersuchenden Kraftfahrzeugscheibe entspricht und wobei das Superponat mit einer Videokamera aufgenommen sowie mit einem Phasenschift-Verfahren ausgewertet und als Maß für die Brechkraft die mit der Videokamera aufgenommene Helligkeitsverteilung eingesetzt wird. Es versteht sich, daß sich die Leuchtwand, vom Objektiv aus gesehen, hinter der zu untersuchenden Scheibe befindet. Das Referenzraster ist durchstrahlbar. Nach bevorzugter Ausführungsform der Erfindung wird die Videokamera auf das Superponat scharf gestellt. Es kann vorkommen, daß das Superponat vom sogenannten Schattenbild der zu untersuchenden Scheibe überlagert ist. Dann kann die Videokamera so verstellt werden, daß das Schattenbild der Scheibe nicht mehr stört. Im Rahmen der Erfindung kann die Videokamera auch auf die Bildebene der Scheibe scharf gestellt werden. Bei dieser Einstellung erscheinen z. B. die Halterungen der Scheibe in der Abbildung der Videokamera scharf. Nichtsdestoweniger ist bei ausreichend großer Tiefenschärfe die erfindungsgemäße Auswertung des Superponats möglich. - Das Phasenschift-Verfahren ist für eine ganz andere Anwendung beispielsweise beschrieben in der Zeitschrift "Optik" (1980), S. 115 - 119, Wissenschaftliche Verlagsgesellschaft mbH, Stuttgart. Es erlaubt eine vollautomatische Auswertung von Moiré-Bildern, wobei die gesuchte Rasterverzerrung lokal aus den Grauwertintensivitäten von mehreren (drei) zusammengehörenden Moiré-Bildern berechnet wird. Die zur Auswertung notwendigen (drei) Moiré-Bilder werden durch Verschieben des Referenz-Flächenrasters erzeugt. Diese Verschiebung senkrecht zu den Rasterlinien erfolgt beispielsweise mittels eines Piezo-Aktuators. Bei der Abbildung des Flächenrasters mit Hilfe des Objektivs durch die zu untersuchende, Brechkraftschwankungen aufweisende Scheibe hindurch erscheinen die Flächenrasterlinien im Bild des Flächenrasters gegenüber den Flächenrasterlinien im Flächenraster und damit gegenüber dem Referenz-Flächenraster, nach Maßgabe der Koordinaten des Flächenrasters örtlich unterschiedlich, um ein Maß Δs verschoben. Wo das Maß Δs konstant ist, ist die Brechkraft null. Mit dem Phasenschift-Verfahren zur Moiré-Bildauswertung kann dieses Δs gemessen bzw. sichtbar gemacht werden.

Im einzelnen bestehen im Rahmen der Erfindung mehrere Möglichkeiten der weiteren Ausbildung und Gestaltung des Verfahrens. Vorzugsweise wird die zu untersuchende Scheibe in einem Abstand von der Leuchtwand angeordnet, der mindestens der größten Erstreckung der Scheibe entspricht. Handelt es sich um eine Kraftfahrzeug-Windschutzscheibe, so liegt dieser Abstand zweckmäßigerweise im Bereich von etwa 2 m. Der Abstand zwischen Scheibe und Objektiv beträgt dabei vorzugsweise etwa 8 bis 10 m, bewährt haben sich etwa 9 m. Die Leuchtwand ist üblicherweise mit einer von hinten gleichmäßig ausgeleuchteten Streuscheibe versehen. Nach bevorzugter Ausführungsform der Erfindung wird das Flächenraster auf einem Referenzraster abgebildet, dessen Flächengröße lediglich einige Quadratzentimeter aufweist. Bewährt hat es sich, mit einem Flächenraster zu arbeiten, dessen Rasterkonstante 0,25 bis 2 Linien/mm, vorzugsweise etwa 1 Linie/mm beträgt. Dabei wird zweckmäßigerweise mit einem Referenzraster gearbeitet, dessen Rasterkonstante 10 bis 80 Linien/mm vorzugsweise etwa 40 Linien/mm beträgt. Die angegebenen Liniendichten lassen sich ohne besonderen Aufwand einrichten und führen zu besonders eindrucksvollen Ergebnissen. Das Abbildungsverhältnis der optischen Anordnung beträgt zweckmäßigerweise 20 : 1 bis 80 : 1, vorzugsweise etwa 40 : 1.

Für das erfindungsgemäße Verfahren kann grundsätzlich jede Videokamera eingesetzt werden, jedoch ist das Auflösungsvermögen bei den erfindungsgemäßen Untersuchungen auch durch die Auflösung der eingesetzten Videokamera bestimmt. Zweckmäßigerweise wird mit einer Videokamera gearbeitet, bei der aus Gründen der Untersuchtungsgenauigkeit zumindest die folgenden Voraussetzungen und Parameter eingehalten sind. Die Auflösung in horizontaler und vertikaler Richtung sollte der nachfolgenden Bildverarbeitung angepaßt sein. Weiterhin soll die Videokamera kein Nachleuchten aufweisen, damit beim Messen der Helligkeitsverteilung nicht Reste des Zuvor aufgenommenen Bildes mitgenommen werden. Die Zahl der Pixel pro Millimeter darf kein Vielfaches der Rasterkonstanten sein, damit nicht störende Moiré-Effekte zwischen den Chips der Videokamera und dem Bild des Superponates auftreten.

Im übrigen wird man im allgemeinen mit einem als Kreuzgitterraster ausgeführten Flächenraster und einem als Kreuzgitterraster ausgeführten Referenz-Flächenraster arbeiten. Nach bevorzugter Ausführungsform der Erfindung wird zur Videokamera hin nach dem Superponat eine Feldlinse angeordnet. Man kann jedoch zur Videokamera hin vor dem Superponat auch eine Mattscheibe anordnen. Auch könnte eine Mattscheibe das Referenz-Flächenraster tragen.

Die einzige Figur zeigt das Schema einer Anordnung zur Durchführung des erfindungsgemäßen Verfahrens.

Man erkennt links einen Lichtkasten 1, auf dessen Leuchtwand ein Flächenraster 2 angeordnet ist. Ein Referenz-Flächenraster 3 befindet sich in erheblichem Abstand davon. Zwischen Flächenraster 2 und Referenz-Flächenraster 3 befindet sich die zu untersuchende Scheibe 4. Das Objektiv 5 zur Abbildung des Flächenrasters 2 befindet sich zwischen der Scheibe 4 und dem Referenz-Flächenraster 3. Dabei ist die Anordnung so getroffen, daß sich das Referenz-Flächenraster 3 superponatbildend in der Ebene des vom Objektiv 5 erzeugten Flächraster-Bildes befindet. Das Superponat wird im Ausführungsbeispiel von einer Feldlinse 6 aufgenommen, die zur Videokamera hin nach dem Superponat angeordnet ist. Es erfolgt eine Aufnahme des Superponates mit Hilfe einer Videokamera 7. Eine elektronische Bildverarbeitung ist angeschlossen.

## Patentansprüche

1. Verfahren für die optische Qualitätsprüfung von großflächigen Scheiben aus einem transparenten Werkstoff wie Glas, insbesondere von Kraftfahrzeug-Windschutzscheiben, mit Hilfe einer Moiré-Bildauswertung, bei der ein beleuchtetes Flächenraster über ein Objektiv auf einem Referenzraster abgebildet und das Moiré-Bild als Superponat aus dem Bild des Flächenrasters und dem Referenzraster erzeugt wird,
- wobei das Flächenraster auf einer von hinten gleichmäßig ausgeleuchteten Leuchtwand angeordnet wird, die zumindest der Größe der zu untersuchenden Kraftfahrzeugscheibe entspricht,
- wobei die zu untersuchende Scheibe zwischen Flächenraster und Objektiv angeordnet wird,
- wobei das Flächenraster auf einem Referenzraster abgebildet wird, dessen Flächengröße einem Bruchteil der Flächengröße der zu untersuchenden Kraftfahrzeugscheibe entspricht und
- wobei das Superponat mit einer Videokamera aufgenommen sowie mit einem Phasenschift-Verfahren ausgewertet und als Maß für die Brechkraft die mit der Videokamera aufgenommene Helligkeitsverteilung eingesetzt wird.

2. Verfahren nach Anspruch 1, wobei das Flächenraster auf einem Referenzraster abgebildet wird, dessen Flächengröße lediglich einige Quadratzentimeter beträgt.

3. Verfahren nach einem der Ansprüche 1 oder 2, wobei mit einem Flächenraster gearbeitet wird, dessen Rasterkonstante 0,25 bis 2 Linien/mm, vorzugsweise etwa 1 Linie/mm beträgt.

4. Verfahren nach einem der Ansprüche 1 bis 3, wobei mit einem Referenzraster gearbeitet wird, dessen Rasterkonstante 10 bis 80 Linien/mm, vorzugsweise etwa 40 Linien/mm beträgt.

5. Verfahren nach einem der Ansprüche 1 bis 4, wobei die Videokamera auf das Superponat scharf gestellt wird.

6. Verfahren nach einem der Ansprüche 1 bis 5, wobei die Videokamera auf die Bildebene der Scheibe scharf gestellt wird.

7. Verfahren nach einem der Ansprüche 1 bis 6, wobei mit einem als Kreuzgitterraster ausgeführten Flächenraster und einem als Kreuzgitterraster ausgebildeten Referenz-Flächenraster gearbeitet wird.

8. Verfahren nach einem der Ansprüche 1 bis 7, wobei mit einem Abbildungsverhältnis der optischen Anordnung im Bereich von 20 : 1 bis 80 : 1, vorzugsweise von etwa 40 : 1, gearbeitet wird.

9. Verfahren nach einem der Ansprüche 1 bis 8, wobei zur Videokamera hin nach dem Superponat eine Feldlinse angeordnet wird.

10. Verfahren nach einem der Ansprüche 1 bis 9, wobei zur Videokamera hin vor dem Superponat eine Mattscheibe angeordnet wird.

## Claims

1. An optical quality inspection method for large-surface sheets of a transparent material such as glass, particularly for motor vehicle windscreens, by means of a moiré image evaluation in which an illuminated surface grid is portrayed on a reference grid via a lens, and the moiré image is produced as a superimposed entity from the image of the surface grid and the reference grid,
- wherein the surface grid is disposed on an illuminated wall which is uniformly illuminated from behind and which corresponds at least to the size of the motor vehicle glass unit to be inspected,
- wherein the sheet to be inspected is disposed between the surface grid and the lens,
- wherein the surface grid is portrayed on a reference grid, the surface area of which corresponds to a fraction of the surface area of the motor vehicle glass unit to be inspected, and
- wherein the superimposed entity is recorded using a video camera and evaluated by means of a phase-shift procedure, and the brightness distribution recorded using the video camera is employed as a measure of the refractivity.

2. A method according to claim 1, wherein the surface grid is portrayed on a reference grid, the surface area of which only amounts to a few square centimetres.

3. A method according to one of claims 1 or 2, wherein a surface grid is employed, the grid constant of which is 0. 25 to 2 lines/mm, preferably about 1 line/mm.

4. A method according to any one of claims 1 to 3, wherein a reference grid is employed, the grid constant of which is 10 to 80 lines/mm, preferably about 40 lines/mm.

5. A method according to any one of claims 1 to 4, wherein the video camera is focused on the superimposed entity.

6. A method according to any one of claims 1 to 5, wherein the video camera is focused on the plane of the image of the test piece.

7. A method according to any one of claims 1 to 6, wherein a surface grid constructed as an intersecting lattice grid is employed, and a reference grid constructed as an intersecting lattice grid is employed.

8. A method according to any one of claims 1 to 7, wherein a reproduction ratio in the range from 20 : 1 to 80 : 1, preferably about 40 : 1, is employed.

9. A method according to any one of claims 1 to 8, wherein a condensing lens is disposed facing towards the video camera after the superimposed entity.

10. A method according to any one of claims 1 to 9, wherein a ground glass screen is disposed facing towards the video camera in front of the superimposed entity.

## Revendications

1. Procédé pour contrôler optiquement la qualité de plaques de surface étendue, réalisées en un matériau transparent, tel que du verre, notamment de pare-brise de véhicules automobiles, à l'aide d'une évaluation d'images selon la méthode de Moiré, l'image d'un réseau superficiel éclairé est formée par l'intermédiaire d'un objectif sur un réseau de référence et l'image de Moiré est produite par la superposition de l'image du réseau superficiel et du réseau de référence, et selon lequel
- le réseau superficiel est disposé sur une paroi éclairante, éclairée uniformément à partir de l'arrière et qui correspond au moins à la taille de la vitre du véhicule automobile devant être examinée,
- la vitre à examiner est disposée entre le réseau superficiel et l'objectif,
- l'image du réseau superficiel est formée sur le réseau de référence, dont l'étendue en surface correspond à une fraction de l'étendue en surface de la vitre du véhicule automobile à examiner, et
- l'image formée par superposition est enregistrée au moyen d'une caméra vidéo et est évaluée au moyen d'un procédé de déphasage, et on utilise en tant que mesure de la réfringence la répartition de luminosité enregistrée par la caméra vidéo.

2. Procédé selon la revendication 1, selon lequel l'image du réseau superficiel est formée sur un réseau de référence, dont l'étendue en surface est égale seulement à quelques centimètres carrés.

3. Procédé selon l'une des revendications 1 ou 2, selon lequel on travaille avec un réseau superficiel, dont le pas est compris entre 0,25 et 2 lignes/mm et égal de préférence à environ 1 ligne/mm.

4. Procédé selon l'une des revendications 1 à 3, selon lequel on travaille avec un réseau de référence, dont le pas est compris entre 10 et 80 lignes/mm et est égal de préférence à environ 40 lignes/mm.

5. Procédé selon l'une des revendications 1 à 4, selon lequel la caméra vidéo est mise au point de façon précise sur l'image formée par superposition.

6. Procédé selon l'une des revendications 1 à 5, selon lequel on met au point de façon précise la caméra vidéo sur le plan image de la vitre.

7. Procédé selon l'une des revendications 1 à 6, selon lequel on travaille avec un réseau superficiel réalisé sous la forme d'un réseau en forme de grille et avec un réseau superficiel de référence réalisé sous la forme d'un réseau en forme de grille.

8. Procédé selon l'une des revendications 1 à 7, selon lequel on travaille avec un rapport de grandissement du dispositif optique se situant dans la gamme de 20:1 à 80:1 et de préférence égale à environ 40:1.

9. Procédé selon l'une des revendications 1 à 8, selon lequel on dispose une lentille de champ en arrière de l'image formée par superposition, en direction de la caméra vidéo.

10. Procédé selon l'une des revendications 1 à 9, selon lequel on dispose une plaque mate en avant de l'image formée par superposition, en direction de la caméra vidéo.
